# EUROPÄISCHE PATENTSCHRIFT

(11) **EP 2 509 831 B1**
(45) Veröffentlichungstag und Bekanntmachung des Hinweises auf die Patenterteilung: **27.08.2014**
(21) Anmeldenummer: 11707583.8
(22) Anmeldetag: 25.02.2011
(51) Int. Cl.: B60T 1/087, F16D 57/04, F16D 66/00

(54) **HYDRODYNAMISCHER RETARDER UND VERFAHREN ZUM BETREIBEN EINES HYDRODYNAMISCHEN RETARDERS**
HYDRODYNAMIC RETARDER AND METHOD FOR OPERATING A HYDRODYNAMIC RETARDER
RALENTISSEUR HYDRODYNAMIQUE ET PROCÉDÉ POUR FAIRE FONCTIONNER UN RALENTISSEUR HYDRODYNAMIQUE

(30) Priorität: 03.03.2010 DE 102010010222
(43) Veröffentlichungstag der Anmeldung: 17.10.2012
(73) Patentinhaber: Voith Patent GmbH, 89522 Heidenheim (DE)
(72) Erfinder: GEIER, Thomas, 88477 Schwendi (DE); LAUKEMANN, Dieter, 74564 Crailsheim (DE); OHR, Thomas, 74564 Crailsheim (DE)
(74) Vertreter: Dr. Weitzel & Partner
(86) Internationale Anmeldenummer: PCT/EP2011/000922
(87) Internationale Veröffentlichungsnummer: WO 2011/107240

(56) Entgegenhaltungen:
- EP-A2- 0 873 925
- DE-A1- 3 807 056
- DE-A1- 10 009 959

## Beschreibung

Die Erfindung betrifft einen hydrodynamischen Retarder nach der im Oberbegriff von Anspruch 1 näher definierten Art. Außerdem betrifft die Erfindung ein Verfahren zum Betreiben eines hydrodynamischen Retarders mit den Merkmalen im Oberbegriff des Anspruchs 7.

Hydrodynamische Retarder sind als verschleißfreie Dauerbremsen, welche beispielsweise in Kraftfahrzeugen, insbesondere Nutzfahrzeugen oder Schienenfahrzeugen, eingesetzt werden, allgemein bekannt. Die hydrodynamischen Retarder bestehen dabei aus einem Arbeitsraum, welcher von einem primären Schaufelrad und einem sekundären Schaufelrad gebildet wird. In diesem Arbeitsraum, in welchem sich die beiden Schaufelräder gegeneinander drehen, befindet sich im Bremsbetrieb des Retarders ein flüssiges Arbeitsmedium, welches eine Kreislaufströmung zwischen dem primären Schaufelrad und dem sekundären Schaufelrad ausbildet. Das primäre Schaufelrad ist im Allgemeinen drehbar ausgeführt. Das sekundäre Schaufelrad ist in diesem Aufbau typischerweise fest mit einem Gehäuse des Retarders oder dergleichen verbunden. Es wird auch als Stator bezeichnet. Im Bremsbetrieb des Retarders kann auf diese Art eine Verlustleistung erzeugt werden, welche dann zum Abbremsen der mit dem typischerweise primären Schaufelrad verbundenen drehbaren Welle dient. Im Nicht-Bremsbetrieb des Retarders wird das Arbeitsmedium aus dem Bereich des Arbeitsraums entfernt. Hierzu kann einerseits die durch das bewegliche primäre Schaufelrad aufgebrachte Pumpwirkung selbst dienen, beispielsweise in dem im Bereich des sekundären Schaufelrads Bohrungen oder Öffnungen vorhanden sind, welche einen Austritt des Arbeitsmediums in einen Vorratsraum, einen Sammelraum oder einen externen Kreislauf für das Arbeitsmedium erlauben.

Da in dem Retarder verbleibendes Arbeitsmedium im Nicht-Bremsbetrieb eine Verlustleistung generiert, welche nicht gewünscht ist, ist es von besonderem Vorteil, wenn das Arbeitsmedium bestmöglich aus dem Arbeitsraum abgeführt wird. Hierfür ist es bekannt, über eine weitere Fördereinrichtung, beispielsweise eine Seitenkanalpumpe, das Arbeitsmedium in diesen Betriebszuständen aus dem Bereich des Arbeitsraums gezielt abzupumpen beziehungsweise den Arbeitsraum sogar bis zu einem gewissen Grad zu evakuieren, um die Verlustleistung durch eventuell verbleibende Reste des Arbeitsmediums in dem Arbeitsraum zu minimieren. Außerdem sind Aufbauten aus dem Stand der Technik bekannt, in denen die Entfernung zwischen dem sekundären Schaufelrad und dem primären Schaufelrad durch ein axiales Verschieben der beiden Schaufelräder gegeneinander für den Nicht-Bremsbetrieb vergrößert wird. Auch dadurch lassen sich Leistungsverluste minimieren. Die Kombination beider Maßnahmen ist dabei möglich und sinnvoll.

Bei hydrodynamischen Retardern sind dabei verschiedene Bauarten und verschiedene Arbeitsmedien für den Retarder bekannt. Das gängigste Arbeitsmedium für einen Retarder ist ein hierfür geeignetes Öl, welches beispielsweise in dem Retardergehäuse, in einem sogenannten internen Arbeitsmedienkreislauf mit einem Vorratsbehälter, entsprechenden Verbindungsleitungen und dem Arbeitsraum des Retarders verbleibt. Bei dem Bremsbetrieb des Retarders entstehende Abwärme wird dann über einen geeigneten Wärmetauscher nach außerhalb des Retarders abgeführt, beispielsweise indem im Bereich des Vorratsbehälters ein von Kühlwasser durchströmter Wärmetauscher angeordnet ist. Die alternative Ausgestaltung wäre ein Retarder mit sogenanntem externen Arbeitsmedienkreislauf, bei dem das Arbeitsmedium aus einem außerhalb des Retardergehäuse angeordneten Kreislauf, welcher einen geeigneten Kühlwärmetauscher zur Abfuhr der entstehenden Verlustwärme aufweist, zu dem Arbeitsraum des Retarders und von diesem wieder zurück in den Bereich des externen Arbeitsmediumkreislaufs geführt wird. Dieser Aufbau mit einem externen Arbeitsmediumkreislauf ist dabei insbesondere bei sogenannten Wasserretardern sehr vorteilhaft, da diese typischerweise mit Kühlwasser, also einem Wasserfrostschutzgemisch, als Arbeitsmedium arbeiten. In diesem Fall kann, beispielsweise bei einem Einsatz eines Retarders in einem Nutzfahrzeug, dieser in den für den verbrennungsmotorischen Antrieb des Nutzfahrzeugs typischerweise ohnehin vorhandenen Kühlkreislauf als eine der wärmeerzeugenden Komponenten mit integriert werden.

In jedem der genannten Fälle ist es nun so, dass beim Bremsbetrieb die im Retarder erzeugte Bremsleistung als Verlustleistung in Wärme umgewandelt wird. Die sichere und zuverlässige Funktionalität des Retarders setzt also immer voraus, dass die im Bereich des Retarders entstehende Wärme sinnvoll und zuverlässig abgeführt werden kann. Dafür sind typischerweise im Bereich des Kühlkreislaufs entsprechende Sensoren vorgesehen, welche die Temperatur des Kühlmediums erfassen. Nur wenn die erfasste Temperatur des Kühlmediums eine sichere und zuverlässige Abfuhr der im Retarder erzeugten Abwärme gewährleistet, wird dieser in den Bremsbetrieb geschaltet. Dieser Temperatursensor ermöglicht so also beispielsweise für eine Steuerungselektronik eine entsprechende Überwachung der abführbaren Wärme, sodass der hydrodynamische Retarder nur dann zugeschaltet wird, wenn dies systemseitig auch möglich ist. Eine weitergehende Überwachung des Retarders ist mittels dieser Sensorik so nicht möglich.

Zum allgemeinen Stand der Technik wird auf EP 0 873 925 A2 und DE 100 09959 A1 hingewiesen. Die Aufgabe der vorliegenden Erfindung besteht nun darin, einen hydrodynamischen Retarder dahingehend weiterzubilden, dass dieser hinsichtlich seiner Funktionalität, insbesondere im Nicht-Bremsbetrieb, leicht überwacht werden kann. Ferner ist es die Aufgabe der hier vorliegenden Erfindung, ein Verfahren zum Betreiben eines derartigen Retarders anzugeben.

Erfindungsgemäß wird diese Aufgabe durch den Retarder mit den Merkmalen im kennzeichnenden Teil des Anspruchs 1 gelöst. Weitere vorteilhafte Ausgestaltungen des Retarders sind in den abhängigen Unteransprüchen angegeben. Die Aufgabe wird außerdem durch ein Verfahren zum Betreiben eines solchen Retarders mit den Merkmalen im kennzeichnenden Teil des Anspruchs 8 angegeben. Vorteilhafte Ausgestaltungen und Weiterbildungen des Verfahrens sind in den jeweils abhängigen Unteransprüchen beschrieben.

Der erfindungsgemäße hydrodynamische Retarder sieht dabei einen Temperatursensor vor, welcher so im Bereich des Retarders angeordnet ist, dass dieser die Temperatur in dem eingeschlossenen Volumen im Nicht-Bremsbetrieb des Retarders überwachen kann. Er befindet sich also auf der dem Retarder zugewandten Seite der wenigstens einen Ventileinrichtung im Volumen des Retarders, also beispielsweise so, dass er in den Arbeitsraum oder einen Volumenbereich zur Zufuhr oder Abfuhr des Arbeitsmediums ragt oder in wärmeleitender Verbindung mit einem im Arbeitsraum angeordneten Bauteil steht. Alternativ dazu kann es vorgesehen sein, dass der Temperatursensor im Bereich eines Ringkanals zur Entleerung des Arbeitsraums angeordnet ist. Dies erlaubt einen sehr einfachen Aufbau, bei dem in den Bereich des eigentlichen Arbeitsraums und damit in den Bereich der Kreislaufströmung zwischen dem primären Schaufelrad und dem sekundären Schaufelrad keinerlei zusätzlichen Bauteile eingebracht werden müssen. Vielmehr kann der Temperatursensor im Bereich eines Ringkanals, welcher zur Entleerung ohnehin vorhanden ist, angeordnet werden. Bevorzugt kann er dabei so in ein Gehäuse des Retarders integriert werden, dass dieser von außen zugänglich ist und so einfach ausgetauscht und gewartet werden kann, und dass die den Temperaturwert weitermeldenden Leitungselemente ohne zusätzliche Durchführungen, Dichtungsprobleme oder dergleichen beispielsweise zu einer Steuerungselektronik geführt werden können.

Auf diese Art lässt sich die Temperatur im Arbeitsraum direkt oder mittelbar erfassen. Anders als mit einem Temperatursensor, welcher beispielsweise im Vorratsbehälter oder im Kühlmedium für einen hydrodynamischen Retarder angeordnet ist, erlaubt der erfindungsgemäße Temperatursensor es auch, die Temperatur im Nicht-Bremsbetrieb des Retarders, also wenn kein Arbeitsmedium oder allenfalls eine minimale Menge an Arbeitsmedium in dem Arbeitsraum ist, zu erfassen. Somit lässt sich der hydrodynamische Retarder über einen einfachen und kostengünstigen Temperatursensor nicht nur im Bremsbetrieb, sondern insbesondere auch im Nicht-Bremsbetrieb anhand des Temperatursensors überwachen.

Beispielsweise kann über einen solchen Temperatursensor erkannt werden, ob der Arbeitsraum des Retarders vollständig frei von Arbeitsmedium ist, oder ob Reste des Arbeitsmediums in dem Arbeitsraum verblieben sind oder entlang der typischerweise vom Arbeitsmedium geschmierten Gleitringdichtungen beispielsweise des primären Schaufelrads, wenn dieses als das bewegliche Schaufelrad ausgebildet ist, in den Arbeitsraum eingedrungen sind. Solche Reste an Arbeitsmedium werden dann im Arbeitsraum des Retarders verwirbelt und verursachen einen Anstieg der Temperatur im Bereich des erfindungsgemäßen Temperatursensors beziehungsweise des mit ihm verbundenen wärmeleitenden Bauteils. Damit kann ein solcher Zustand, in welchem eine unerwünschte Bremsleistung und damit eine Verlustleistung in dem Antriebsstrang, in welchem der Retarder typischerweise angeordnet ist, erzeugt wird, detektiert werden. Über geeignete Maßnahmen kann dann eine erneute Entleerung des Arbeitsraums erfolgen, um so die im Retarder entstehende Verlustleistung über die Betriebsdauer desselben im Nicht-Bremsbetrieb zu minimieren.

In einer weiteren besonders günstigen und vorteilhaften Ausgestaltung des hydrodynamischen Retarders ist es ferner vorgesehen, dass dieser durch eine Fördereinrichtung entleerbar und/oder evakuierbar ist. Prinzipiell ist es so, dass der Retarder selbst eine Pumpwirkung erzeugt, welche diesen bis zu einem gewissen Grad entleert. Allerdings ist eine vollständige Entleerung des Retarders beziehungsweise des Arbeitsraums desselben von dem Arbeitsmedium durch seine eigene Pumpwirkung meist nicht zu erzielen. Daher kann über eine zusätzliche Fördereinrichtung, welche beispielsweise als Seitenkanalpumpe ausgebildet sein kann, eine vollständige Entleerung und sogar eine geringfügige Evakuierung des Arbeitsraums des hydrodynamischen Retarders erreicht werden. Auch dies dient zur weiteren Minimierung von Leistungsverlusten im Nicht-Bremsbetrieb und erlaubt außerdem einen sehr schnellen Wechsel vom Bremsbetrieb in den Nicht-Bremsbetrieb, da zusätzlich zur Pumpwirkung des Retarders selbst über die zusätzliche Fördereinrichtung eine entsprechende Pumpwirkung erzielt wird. Das Arbeitsmedium kann so noch schneller aus dem Arbeitsraum abgeführt werden. Insbesondere in Kombination mit dem Temperatursensor ist dieser Aufbau von besonderem Vorteil, da beispielsweise beim Auftreten einer Temperaturerhöhung, welche aufgrund einer gewissen Restmenge oder einer über eine gewünschte oder unerwünschte Leckage in den Arbeitsraum eintretenden Menge an Arbeitmedium verursacht wird, über die zusätzliche Fördereinrichtung diese Restmenge dann aus dem Arbeitsraum sehr leicht wieder abgeführt werden kann. Die Verlustleistung des Retarders im Nicht-Bremsbetrieb wird so gesenkt.

Das erfindungsgemäße Verfahren zum Betreiben eines hydrodynamischen Retarders nutzt einen Retarder, bei welchem ein Arbeitsraum von einem primären Schaufelrad und einem sekundären Schaufelrad gebildet wird und zwischen welchen sich eine Kreislaufströmung eines Arbeitsmediums im Bremsbetrieb des Retarders einstellt. Im Nicht-Bremsbetrieb des Retarders ist dieser über eine Fördereinrichtung entleerbar, wobei diese Fördereinrichtung zusätzlich zu einer eigenen Pumpwirkung des Retarders vorgesehen ist. Erfindungsgemäß wird dann im Arbeitsraum dieses Retarders über einen Temperatursensor, welcher auf der dem Arbeitsraum zugewandten Seite wenigstens einer Ventileinrichtung zur Steuerung des zu- und/oder abströmenden Arbeitsmediums angeordnet ist, die Temperatur erfasst. Somit kann über den Temperatursensor die Temperatur im Volumen des Retarders, welches im Nicht-Bremsbetrieb von der beziehungsweise den Ventileinrichtungen eingeschlossen ist, überwacht werden. Die Überwachung der Temperatur kann dabei zur Funktionsüberwachung des Retarders genutzt werden. Insbesondere im Nicht-Bremsbetrieb bildet sich die Kreislaufströmung aus der im Retarder verbleibenden Luft aus. Im Idealfall ist diese frei oder zumindest annähernd frei von dem Arbeitsmedium, sodass nur eine minimale Verlustleistung in dem Retarder entsteht und keine nennenswerte Temperaturerhöhung über den Temperatursensor zu erkennen ist. Sobald nun ein Rest an Arbeitsmedium in dem Retarder verblieben ist oder über eine Leckage oder als Schmierung der Gleitringdichtungen in den Bereich des Retarders eindringt, wird sich die Luft mit dieser Restmenge an Arbeitsmedium vermischen und zusammen mit dieser die Kreislaufströmung ausbilden. Aufgrund der Tatsache, dass nun eine Flüssigkeit im Bereich der Kreislaufströmung zwischen dem sekundären Schaufelrad und dem primären Schaufelrad verwirbelt wird, kommt es zu einer Erhöhung der Temperatur, welche über den Temperatursensor sicher, zuverlässig und schnell erkannt werden kann.

Gemäß einer besonders günstigen und vorteilhaften Weiterbildung des erfindungsgemäßen Verfahrens ist es dabei vorgesehen, dass im Nicht-Bremsbetrieb eine Entleerung des Retarders über die Fördereinrichtung ausgelöst wird, wenn die Temperatur über einen vorgegebenen Grenzwert ansteigt. Wenn die Temperatur beziehungsweise die Überwachung der Temperatur ergibt, dass die Temperatur im Arbeitsraum beziehungsweise im Bereich der Kreislaufströmung über einen vorgegebenen Grenzwert ansteigt, dann kann eine Entleerung über die Fördereinrichtung erfolgen. Die in dem Arbeitsraum des Retarders befindliche Menge an Arbeitsmedium, welche in der oben genannten Art für die Temperaturerhöhung verantwortlich ist, wird so aus dem Arbeitsraum abgepumpt, sodass eine Minimierung der durch den Retarder auftretenden Verluste im Nicht-Bremsbetrieb erzielt wird.

In einer sehr günstigen und vorteilhaften Weiterbildung des erfindungsgemäßen Verfahrens ist es außerdem vorgesehen, dass immer dann, wenn die Temperatur über einen vorgegebenen (weiteren) Grenzwert ansteigt, der Retarder für wenige Millisekunden in den Bremsbetrieb geschaltet wird. Dieses kurzzeitige Schalten in den Bremsbetrieb bewirkt dabei nicht wirklich den Aufbau einer nennenswerten Bremsleistung, sondern sorgt durch das Einbringen von einer geringen Menge an Arbeitsmedium lediglich für eine Abkühlung des Systems, da das Arbeitsmedium, welches hier in einem kurzen Impuls in den Bereich des Arbeitsraums einströmt, als Kühlmedium dient. Dieses wird dann über die beiden Schaufelräder in dem Arbeitsraum verwirbelt, sodass die Temperatur nicht unter dem oben beschriebenen Grenzwert fallen wird. Daher wird gleichzeitig oder kurz nach dem Einbringen einer minimalen Menge an Arbeitsmedium durch das kurzfristige Schalten in den Bremsbetrieb die Entleerung über die Fördereinrichtung angestoßen. Damit ergibt sich ein kurzer Schmier- beziehungsweise Kühlimpuls, welcher einen feinen Flüssigkeitsnebel im Bereich des Arbeitsraums verteilt, welcher, ohne nennenswerte Verlustleistung zu erzeugen, zur Abkühlung des Arbeitsraums, und hier insbesondere zur Kühlung und Schmierung der Gleitringdichtungen des beweglichen Schaufelrades dient.

In einer weiteren sehr günstigen und vorteilhaften Ausgestaltung des erfindungsgemäßen Verfahrens ist es außerdem vorgesehen, dass der Retarder nur dann vom Nicht-Bremsbetrieb in den Bremsbetrieb geschaltet wird, wenn eine Temperatur, welche in dem Arbeitsmedium in einem externen Arbeitsmediumkreislauf oder in einem Kühlkreislauf für das Arbeitsmedium gemessen wird, kleiner als eine Grenztemperatur ist, wobei nach dem Wechsel in den Bremsbetrieb bis zum nächsten Wechsel in den Bremsbetrieb die Temperatur des Retarders anhand der Temperatur im Arbeitsraum überwacht wird. In dieser besonders günstigen und vorteilhaften Weiterbildung des erfindungsgemäßen Verfahrens wird der oben beschriebene Temperatursensor zur zumindest mittelbaren Erfassung der Temperatur im Arbeitsraum des Retarders nun zur Steuerung des Retarders genutzt, wenn dieser im Bremsbetrieb befindlich ist und sich anschließend an einen solchen Bremsbetrieb im Nicht-Bremsbetrieb befindet. Das Einschalten des Bremsbetriebs selbst erfolgt dabei nicht anhand der Temperatur, welche mit dem erfindungsgemäßen Temperatursensor im Bereich des Retarders erfasst worden ist, da hierdurch keine Aussage über die Aufnahmefähigkeit des Kühlkreislaufs für die im Bereich des Retarders entstehende Wärme gegeben wäre. Hierfür wird vielmehr der bisher bekannte und übliche Aufbau mit einem Temperatursensor im Bereich des Arbeitsmediums außerhalb des Retarders oder in einem Kühlkreislauf für das Arbeitsmedium gemessen. Damit ist sichergestellt, dass der Retarder, wie bisher auch, nur dann zugeschaltet wird, wenn eine entsprechende Aufnahmekapazität für die von ihm erzeugte Verlustleistung im Bereich des Kühlsystems vorhanden ist.

Weitere vorteilhafte Ausgestaltungen des hydrodynamischen Retarders sowie des Verfahrens zum Betreiben desselben ergeben sich aus den restlichen abhängigen Ansprüchen und werden anhand des Ausführungsbeispiels deutlich, welches nachfolgend unter Bezugnahme auf die Figuren näher beschrieben wird.

Dabei zeigen:
- Figur 1: ein mögliches Ausführungsbeispiel für einen erfindungsgemäßen hydrodynamischen Retarder; und
- Figur 2: einen Antriebsstrang mit dem erfindungsgemäßen hydrodynamischen Retarder.

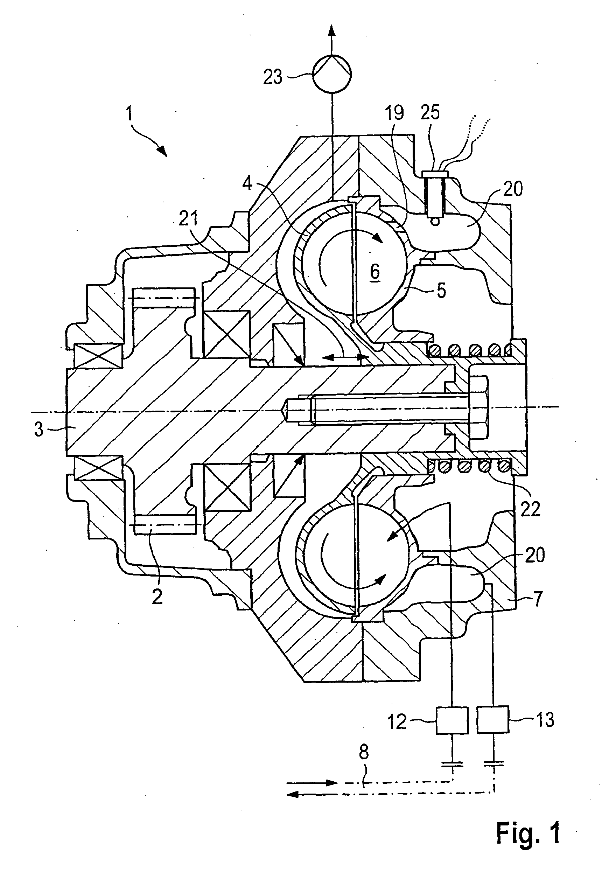

In der Darstellung der Figur 1 ist ein hydrodynamischer Retarder 1 zu erkennen. Dieser soll beispielhaft als Wasserretarder ausgebildet sein und mit dem Kühlwasser eines Antriebsstrangs in einem Nutzfahrzeug als Arbeitsmedium betrieben werden. Der hydrodynamische Retarder 1 ist über ein Ritzel 2 und eine Welle 3, welche einstückig mit dem Ritzel ausgeführt oder auf welcher das Ritzel 2 entsprechend montiert ist, angetrieben. Das Ritzel 2 kann dabei insbesondere mit einem korrespondierenden Ritzel an einem Nebenabtrieb eines Getriebes oder dergleichen kämmen. Der Retarder 1 ist also als Sekundär-Wasserretarder ausgebildet. Dieser Aufbau ist dabei rein beispielhaft zu verstehen. Der Retarder könnte genauso gut mit einem anderen Arbeitsmedium, beispielsweise Öl oder anderen geeigneten Stoffen beziehungsweise Stoffgemischen, betrieben werden. Auch die Ausbildung als Sekundär-Retarder ist rein beispielhaft zu verstehen. Der Retarder könnte auch in einem Getriebe integriert oder als Inline-Retarder im Triebstrang eines Fahrzeugs oder auch einer stationären Anlage ausgebildet sein. Über das Ritzel 2 und die Welle 3 wird die Leistung in den Retarder 1 eingebracht. Hier ist ein drehfest mit der Welle 3 verbundenes primäres Schaufelrad 4 angeordnet, welches mit einem sekundären Schaufelrad 5 einen Arbeitsraum 6 ausbildet. Das sekundäre Schaufelrad 5 wird auch als Stator bezeichnet und ist drehfest mit einem Gehäuse 7 des Retarders 1 verbunden.

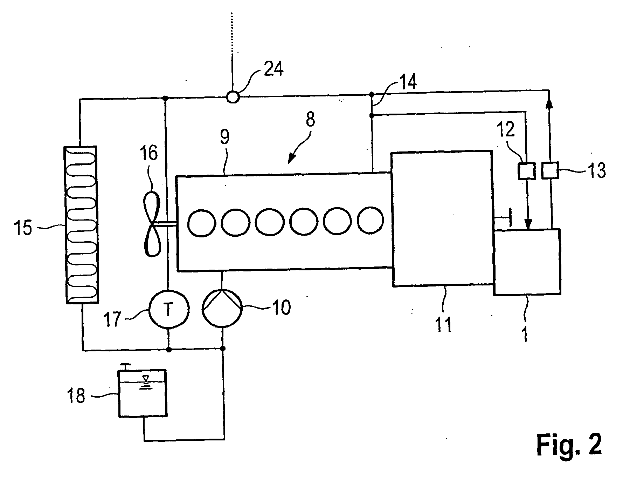

Im Bremsbetrieb des Retarders 1 findet ein ständiger Arbeitsmediumaustausch zwischen dem Arbeitsraum 6 und einem externen Arbeitsmediumkreislauf 8 statt. Der externe Arbeitsmediumkreislauf 8 ist dabei in Figur 1 strichpunktiert schematisch angedeutet und soll entsprechend der Ausgestaltung des Retarders 1 als Wasserretarder gleichzeitig der Kühlkreislauf 8 für einen in Figur 2 angedeuteten Verbrennungsmotor 9 sein, welcher zum Antrieb des mit dem Retarder 1 ausgestatteten Fahrzeugs dient. In dem Kühlkreislauf 8 strömt ein geeignetes Kühlmittel, beispielsweise ein Wasser-Frostschutz-Gemisch, von einer Kühlmittelfördereinrichtung 10 durch den Verbrennungsmotor 9 zu dem, beispielsweise an einem Nebenabtrieb eines Getriebes 11, angeordneten Retarder 1. Der Retarder 1 ist dabei über zwei Ventileinrichtungen 12, 13 bei Bedarf mit dem externen Kühlkreislauf 8 verbunden. Ist der Retarder 1 nicht in Betrieb, so kann das Kühlmittel über einen Bypass 14 nach dem Verbrennungsmotor 9 und über einen Wärmetauscher 15 zurück zur Kühlmittelfördereinrichtung 10 strömen. Im Bereich des Kühlwärmetauschers 15 wird das Kühlmittel dabei abgekühlt, wozu in an sich bekannter Art und Weise der Fahrtwind und gegebenenfalls eine über ein Gebläse 16 erzeugte Luftströmung dient. Über ein Thermostatventil 17 kann der Kühlwärmetauscher 15 außerdem in an sich bekannter Art und Weise ganz oder teilweise umgangen werden. Wie es bei derartigen Kühlkreisläufen 8 üblich ist, weist dieser außerdem einen Ausgleichsbehälter 18 für das Kühlmittel auf, welcher in der Darstellung der Figur 2 angedeutet ist.

Die Anbindung des externen Kühlkreislaufs 8 an den Retarder 1 erfolgt dabei, wie bereits erwähnt, über zwei Ventileinrichtungen 12, 13, wobei typischerweise die Ventileinrichtung 12 als reines Auf-Zu-Ventil ausgebildet ist, während über die Ventileinrichtung 13, welche als Regelventil ausgebildet ist, der Füllgrad des Retarders 1 mit dem Arbeitsmedium eingestellt beziehungsweise geregelt werden kann, um so das gewünschte Bremsmoment zu erzeugen. Dabei ist zu bedenken, dass neben diesem typischerweise verwendeten idealen Aufbau auch ein Aufbau mit lediglich einer der Ventileinrichtungen prinzipiell möglich und denkbar wäre.

Das Arbeitsmedium gelangt dann während des Bremsbetriebs des Retarders 1 oder beim Übergang vom Bremsbetrieb in den Nicht-Bremsbetrieb aus dem Arbeitsraum 6 über eine Vielzahl von Auslassbohrungen 19 im sekundären Schaufelrad 5 in einen sich in einer Kreisringform über den Umfang des Retarders 1 erstreckenden Ringkanal 20 und von dort über die Ventileinrichtung 13 zurück in den externen Arbeitsmediumkreislauf beziehungsweise Kühlkreislauf 8. Durch die im Strömungsweg des Arbeitsmediums beim Verlassen des Arbeitsraums 6 auftretenden Druckverluste kann es nun dazu kommen, dass keine vollständige Entleerung des Arbeitsraums 6 im Nicht-Bremsbetrieb beziehungsweise beim Übergang vom Bremsbetrieb in den Nicht-Bremsbetrieb auftritt. Das im Arbeitsraum 6 verbleibende Arbeitsmedium führt dann dazu, dass auch im Nicht-Bremsbetrieb ein Restdrehmoment von dem primären Schaufelrad 4 auf das sekundäre Schaufelrad 5 übertragen wird, was zu einem unerwünschten Leistungsverlust im Antriebsstrang führt. Als eine erste Maßnahme, um diesen Leistungsverlust zu vermindern, kann es daher vorgesehen sein, dass das primäre Schaufelrad 4 im Nicht-Bremsbetrieb des Retarders 1 in axialer Richtung der Welle 3 vom sekundären Schaufelrad abgefahren wird, was in der Darstellung der einzigen Figur durch die Pfeile 21 sowie die hierfür vorgesehene Druckfeder 22 angedeutet ist.

Um eine bessere Entleerung des Arbeitsraums 6 zu ermöglichen kann außerdem eine Fördereinrichtung 23 vorgesehen sein. Diese Fördereinrichtung 23 kann entweder im externen Arbeitsmedienkreislauf 8 oder auch im Bereich des hydrodynamischen Retarders 1 beziehungsweise seines Gehäuses 3 vorgesehen sein. Sie kann insbesondere als Seitenkanalpumpe ausgebildet sein. Eine solche Seitenkanalpumpe als Bestandteil eines hydrodynamischen Retarders 1 ist dabei aus dem Stand der Technik bekannt, sodass auf deren Aufbau hier nicht näher eingegangen wird. Beispielhaft wird jedoch auf den beispielhaften Aufbau einer solchen Seitenkanalpumpe in der EP 2 006 564 A2 verwiesen. Die Saugseite der Fördereinrichtung 23 ist typischerweise mit dem Gehäuse 7 des Retarders 1 in dem Bereich, welcher das primäre Schaufelrad 4, also den Rotor, umgibt, angeordnet und saugt damit das Arbeitsmedium direkt im Bereich des primären Schaufelrads 4 aus dem Arbeitsraum 6 ab. Die Fördereinrichtung 23 ermöglicht so, neben der durch den hydrodynamischen Retarder 1 selbst aufgebrachten Förderwirkung auf das Arbeitsmedium, einen zusätzlichen Sog, um das Arbeitsmedium aus dem Bereich des Arbeitsraums 6 abzusaugen. Das geförderte Arbeitsmedium gelangt direkt oder zum Beispiel über den Ringkanal 20 zurück in den Kühlkreislauf 8.

Im Bereich des externen Arbeitsmeidumkreislaufs 8, welcher als Kühlkreislauf für den Verbrennungsmotor 9 dient, ist nun ein Temperatursensor 24 vorgesehen. Der Temperaturwert dieses Temperatursensors 24 wird an eine Steuerungselektronik gemeldet und ausgewertet. Die Steuerungselektronik, welche auch die Ventileinrichtungen 12, 13 steuert, kann nun den hydrodynamischen Retarder 1 einschalten, also vom Nicht-Bremsbetrieb in den Bremsbetrieb wechseln, wenn die Temperatur, welche über den Temperatursensor 24 erfasst worden ist, signalisiert, dass die im Retarder 1 beim nachfolgenden Bremsvorgang entstehende Verlustwärme von dem Arbeitsmedium in dem externen Arbeitsmediumkreislauf/Kühlkreislauf 8 aufgenommen werden kann. Dann können die Ventileinrichtungen 12, 13 so gesteuert werden, dass der gesamte oder gegebenenfalls auch nur ein Teil des Kühlmedienstroms durch den hydrodynamischen Retarder 1 strömt und dabei die im hydrodynamischen Retarder 1 entstehende Abwärme beim gewünschten Bremsvorgang aufnimmt. Der gezeigte Aufbau des Arbeitsmediumkreislaufs beziehungsweise Kühlkreislaufs 8 ist dabei rein beispielhaft zu verstehen.

Dieser Aufbau ist so aus dem Stand der Technik bekannt und ermöglicht eine entsprechende Ansteuerung und einen Betrieb des Retarders 1 in Abhängigkeit der Temperatur in dem Kühlmedium beziehungsweise beim Aufbau als Wasserretarder im Arbeitsmedium des Retarders 1 im Kühlkreislauf 8. Dies ist für einen zuverlässigen Betrieb und insbesondere für die Minimierung der Verlustleistung jedoch nicht ausreichend. Daher ist in dem hier dargestellten Aufbau ein Temperatursensor 25 im Bereich des Ringkanals 20 vorgesehen. Dieser Temperatursensor 25 kann idealerweise so in dem Gehäuse 7 des Retarders 1 platziert werden, dass dieser von außerhalb des Gehäuses her zugänglich ist und in einen mit dem Arbeitsraum 6 unmittelbar korrespondierenden Bereich, beispielsweise in den Ringkanal, 20 ragt. Aufgrund der Tatsache, dass Temperatursensoren sehr zuverlässig und extrem klein ausgeführt werden können, ist ein unmittelbares Einbringen in die Kreislaufströmung in den Arbeitsraum ebenso denkbar, ohne diese allzu sehr in ihren Strömungseigenschaften zu stören.

Über den Temperaturwert des Temperatursensors 25 kann nun eine Temperatur des in dem Retarder 1 eingeschlossenen Arbeitsmediums, also des im Ausführungsbeispiel der Figur 1 zwischen den Ventileinrichtungen 12 und 13 eingeschlossenen Arbeitsmediums erfolgen. Damit kann der Retarder 1 auch dann überwacht werden, wenn dieser sich im Nicht-Bremsbetrieb befindet. Der Temperatursensor 25 liefert den erfassten Temperaturwert zum Beispiel an die Steuerungselektronik, welche neben den Ventileinrichtungen 12, 13 auch die Fördereinrichtung 23 steuert.

Im Bremsbetrieb des Retarders 1 kann über den Temperatursensor 25 nun der Betrieb überwacht werden. Sollten ungewöhnlich hohe Temperaturen auftreten, so könnte über die Steuerungselektronik gegebenenfalls eine Notabschaltung realisiert werden. Der eigentliche Vorteil des in dem Ringkanal 20 angeordneten Temperatursensors 25 ergibt sich jedoch insbesondere dann, wenn der Retarder 1 im Nicht-Bremsbetrieb betrieben wird. Wie oben bereits erwähnt, kann es beispielsweise beim Wechsel vom Bremsbetrieb in den Nicht-Bremsbetrieb und dem damit verbundenen Entleeren des Arbeitsraums 6 zu einem Verbleiben eines Rests an Arbeitsmedium in dem Arbeitsraum 6 kommen. Ebenso kann Arbeitsmedium über unerwünschte oder konstruktiv gewollte Leckagen, beispielsweise entlang der Gleitringdichtungen, in den Bereich des Arbeitsraums 6 gelangen. In all diesen Fällen wird im Nicht-Bremsbetrieb durch das Arbeitsmedium ein Drehmoment zwischen den beiden Schaufelrädern 4, 5 übertragen, welches zu nicht gewünschten Leistungsverlusten führt. Da das Arbeitsmedium beziehungsweise der Rest an Arbeitsmedium länger im Arbeitsraum 6 verbleibt und keine echte Durchströmung des Arbeitsraums 6 auftritt, wird sich in diesen Situationen die Temperatur im Arbeitsraum 6 beziehungsweise in der dann stattfindenden Kreislaufströmung aus Luft und Resten des Arbeitsmediums erhöhen. Oberhalb einer vorgegebenen Grenztemperatur, welche bei einem Wasserretarder beispielweise bei ca. 120 °C liegen kann, kann über den Temperatursensor 25 dann ein solcher Zustand detektiert werden. Über die Steuerungselektronik kann in diesem Fall, also immer wenn die Temperatur im Nicht-Bremsbetrieb beispielsweise bei einem Wasserretarder über 120 °C steigt, eine Betätigung der Fördereinrichtung 23 ausgelöst werden. Das Arbeitsmedium wird dann aus dem Arbeitsraum 6 abgesaugt, sodass das Auftreten von weiteren Leistungsverlusten verhindert wird. Über einen längeren Zeitraum hinweg können Leistungsverluste so deutlich minimiert werden. Dies ist insbesondere deshalb wichtig, da ein derartiger Retarder 1 im üblichen Einsatz einen Großteil seiner Zeit im Nicht-Bremsbetrieb betrieben wird, sodass durch die Reduzierung der unerwünschten Leistungsverluste ein erheblicher Vorteil hinsichtlich des Wirkungsgrads und letztlich des Primärenergieverbrauchs des Antriebsstrangs zu erzielen ist.

Eine weitere, ergänzende oder alternative Möglichkeit zur Nutzung des Temperatursensors 25 zur Überwachung der Funktion des Retarders 1 im Nicht-Bremsbetrieb liegt nun darin, die Temperatur dahingehend zu überwachen, dass diese nicht soweit ansteigt, dass Zustände auftreten, welche die Funktionalität des Retarders 1 nachteilig beeinflussen. Solche Zustände könnten beispielsweise eine Aufheizung des Arbeitsraums 6 sein, ohne dass Arbeitsmedium in diesem Arbeitsraum vorhanden ist, zum Beispiel durch erhöhte Reibung der Gleitlager, beispielsweise wenn diese trockenlaufen sollten oder durch andere unerwünschte Reibungseffekte. In diesem Fall könnte durch die hohe Temperatur Dichtungen und/oder Lager geschädigt werden. Sollte der Temperatursensor 25 daher eine Temperatur über einem kritischen Grenzwert erkennen, welcher typischerweise über dem zuvor genannten Grenzwert liegen wird, dann kann über die Steuerungselektronik und die Ventileinrichtung 12 ein kurzzeitiger Wechsel in den Bremsbetrieb des Retarders 1 realisiert werden. Ein solcher Wechsel wird dabei nur für einige Millisekunden anhalten, sodass keine echte Bremsleistung im Bereich des Retarders 1 aufgebaut wird, sondern lediglich ein kurzer Impuls des Arbeitsmediums in den Arbeitsraum 6 gelangt. Ein solcher kurzer Kühl- oder Schmierimpuls dient dazu, die überhitzten Bereiche mit Arbeitsmedium zu benetzen und zu kühlen, um so eine bessere Funktionalität und eine höhere Lebensdauer zu gewährleisten. Das bei einem solchen Kühl- oder Schmierimpuls eingebrachte überschüssige Arbeitsmedium wird dann entweder über die Auslassbohrungen und den Ringkanal 20 in der herkömmlichen Art und Weise abgeführt oder durch die Fördereinrichtung 23 beziehungsweise die Seitenkanalpumpe abgesaugt.

Durch die Positionierung des Temperatursensors 25 im Retarder 1 selbst lässt sich so mit sehr einfachen und effizienten Mitteln eine deutliche Verbesserung des Betriebs eines Retarders 1, insbesondere im Nicht-Bremsbetrieb erzielen, welche über die geeigneten Maßnahmen eine Minimierung der Verlustleistung ebenso sicherstellt, wie durch die Möglichkeit eines Kühl- beziehungsweise Schmierimpulses eine hohe Lebensdauer der Bauteile gewährleistet. Der Temperatursensor 25 sollte sich dabei im Retarder 1 selbst, insbesondere jedoch in dem durch die Ventileinrichtungen 12 und 13 eingeschlossenen Volumen des Arbeitsmediums befinden. Insbesondere kann er im Bereich des durch das Gehäuse 7, welches zumindest den Arbeitsraum und gegebenenfalls ein Volumen zur Abfuhr des Arbeitsmediums und/oder zur Zufuhr desselben umfasst, angeordnet sein.

## Patentansprüche

1. Hydrodynamischer Retarder (1) mit
1.1 einem Arbeitsraum (6), gebildet von
1.2 einem primären Schaufelrad (4) und einem sekundären Schaufelrad (5), zwischen welchen sich im Bremsbetrieb des Retarders (1) eine Kreislaufströmung eines Arbeitsmediums ausbildet,
1.3 wenigstens einer Ventileinrichtung (12, 13) zum Steuern des zu- und/oder abströmenden Volumenstroms des Arbeitsmediums,
1.4 einem Temperatursensor (25), welcher
1.5 auf der dem Arbeitsraum (6) zugewandten Seite der wenigstens einen Ventileinrichtung (12, 13) angeordnet ist,
**dadurch gekennzeichnet, dass**
1.6 der Temperatursensor (25) im Arbeitsraum (6) angeordnet ist; oder
1.7 in wärmeleitender Verbindung mit einem im Arbeitsraum (6) angeordneten Bauteil steht; oder
1.8 der Temperatursensor (25) im Bereich eines Ringkanals (20) zur Entleerung des Arbeitsraums (6) angeordnet ist.

2. Hydrodynamischer Retarder nach Anspruch 1, **dadurch gekennzeichnet, dass** der Temperatursensor (25) im Bereich eines Gehäuses (7) des Retarders (1) angeordnet ist.

3. Hydrodynamischer Retarder nach Anspruch 2, **dadurch gekennzeichnet, dass** der Temperatursensor (25) so in dem Gehäuse (7) angeordnet ist, dass er von außerhalb des Gehäuses (7) aus zugänglich ist.

4. Hydrodynamischer Retarder nach einem der Ansprüche 1 bis 3, **gekennzeichnet durch** eine Fördereinrichtung (23), mittels welcher der Arbeitsraum (6) entleerbar und/oder evakuierbar ist.

5. Hydrodynamischer Retarder nach einem der Ansprüche 1 bis 4, **dadurch gekennzeichnet, dass** für das Arbeitsmedium ein externer Arbeitsmediumkreislauf (8) vorgesehen ist.

6. Hydrodynamischer Retarder nach einem der Ansprüche 1 bis 5, **dadurch gekennzeichnet, dass** als Arbeitsmedium das Kühlmittel in einem Kühlkreislauf eines verbrennungsmotorischen Antriebsstrangs ausgebildet ist.

7. Verfahren zum Betreiben eines hydrodynamischen Retarders (1) mit
7.1 einem Arbeitsraum (6), gebildet von
7.2 einem primären Schaufelrad (4) und einem sekundären Schaufelrad (5), zwischen welchen sich im Bremsbetrieb des Retarders (1) eine Kreislaufströmung eines Arbeitsmediums ausbildet, wobei
7.3 der Retarder (1) im Nicht-Bremsbetrieb über eine Fördereinrichtung (23) entleert werden kann, und wobei
7.4 das Entleeren über wenigstens eine Ventileinrichtung (12, 13) zum Steuern des zu- und/oder abströmenden Volumenstroms an Arbeitsmedium erfolgt, **dadurch gekennzeichnet, dass**
7.5 im Arbeitsraum (6) über einen Temperatursensor (25) auf der dem Arbeitsraum (6) zugewandten Seite der wenigstens einen Ventileinrichtung (12, 13) die Temperatur im Bereich des Retarders (1) erfasst wird.

8. Verfahren nach Anspruch 7, **dadurch gekennzeichnet, dass** im Nicht-Bremsbetrieb eine Entleerung des Retarders (1) über die Fördereinrichtung (23) ausgelöst wird, wenn die Temperatur über einen vorgegebenen Grenzwert ansteigt.

9. Verfahren nach Anspruch 7 oder 8, **dadurch gekennzeichnet, dass**, wenn die Temperatur über einen vorgegebenen (weiteren) Grenzwert ansteigt, der Retarder (1) für wenige Millisekunden in den Bremsbetrieb geschaltet wird.

10. Verfahren nach Anspruch 7, 8 oder 9, **dadurch gekennzeichnet, dass** der Retarder (1) nur dann vom Nicht-Bremsbetrieb in den Bremsbetrieb geschaltet wird, wenn eine Temperatur, welche in dem Arbeitsmedium in einem externen Arbeitsmediumkreislauf (8) oder in einem Kühlkreislauf für das Arbeitsmedium gemessen wird, kleiner als eine Grenztemperatur ist, wobei nach dem Wechsel in den Bremsbetrieb bis zum nächsten Wechsel in den Bremsbetrieb die Temperatur des Retarders (1) anhand der Temperatur im Retarder (1) überwacht wird.

## Claims

1. A hydrodynamic retarder (1) having
1.1 a working chamber (6), formed by
1.2 a primary blade wheel (4) and a secondary blade wheel (5), between which a circuit flow of a working medium forms in braking operation of the retarder (1),
1.3 at least one valve device (12, 13) for controlling the inflowing and/or outflowing volume stream of the working medium,
1.4 a temperature sensor (25), which
1.5 is arranged on the side facing toward the working chamber (6) of the at least one valve device (12, 13),
**characterized in that**
1.6 the temperature sensor (25) is arranged in the working chamber (6); or
1.7 has a heat-conductive connection to a component arranged in the working chamber (6); or
1.8 the temperature sensor (25) is arranged in the region of a ring channel (20) for emptying the working chamber (6).

2. The hydrodynamic retarder according to Claim 1, **characterized in that** the temperature sensor (25) is arranged in the region of a housing (7) of the retarder (1).

3. The hydrodynamic retarder according to Claim 2, **characterized in that** the temperature sensor (25) is arranged in the housing (7) in such a manner that is accessible from outside the housing (7).

4. The hydrodynamic retarder according to one of Claims 1 to 3, **characterized by** a conveyor device (23), by means of which the working chamber (6) can be emptied and/or evacuated.

5. The hydrodynamic retarder according to one of Claims 1 to 4, **characterized in that** an external working medium circuit (8) is provided for the working medium.

6. The hydrodynamic retarder according to one of Claims 1 to 5, **characterized in that** the coolant in a cooling circuit of an internal-combustion-engine drivetrain is designed as the working medium.

7. A method for operating a hydrodynamic retarder (1) having
7.1 a working chamber (6), formed by
7.2 a primary blade wheel (4) and a secondary blade wheel (5), between which a circuit flow of a working medium forms in braking operation of the retarder (1),
7.3 the retarder (1) being able to be emptied via a conveyor device (23) in non-braking operation, and
7.4 the emptying being performed via at least one valve device (12, 13) for controlling the inflowing and/or outflowing volume stream of working medium,
**characterized in that**
7.5 the temperature in the region of the retarder (1) is detected in the working chamber (6) via a temperature sensor (25) on the side facing toward the working chamber (6) of the at least one valve device (12, 13).

8. The method according to Claim 7, **characterized in that**, in non-braking operation, emptying of the retarder (1) via the conveyor device (23) is triggered if the temperature rises above a predefined limiting value.

9. The method according to Claim 7 or 8, **characterized in that**, if the temperature rises above a predefined (further) limiting value, the retarder (1) is switched into braking operation for a few milliseconds.

10. The method according to Claim 7, 8, or 9, **characterized in that** the retarder (1) is only switch from non-braking operation into braking operation if a temperature which is measured in the working medium in an external working medium circuit (8) or in a cooling circuit for the working medium is less than a limiting temperature, the temperature of the retarder (1) being monitored on the basis of the temperature in the retarder (1) after the change into braking operation until the next change into braking operation.

## Revendications

1. Retardateur hydrodynamique (1) comportant
1.1 un espace de travail (6), composé
1.2 d'une roue à aubes primaire (4) et d'une roue à aubes secondaire (5), entre lesquelles se forme un écoulement circulaire de fluide de travail avec le retardateur (1) en mode freinage,
1.3 au moins un dispositif de soupape (12, 13) pour commander le courant volumique du fluide de travail circulant dans les deux sens,
1.4 un capteur de température (25), qui
1.5 est prévu sur le côté dudit au moins un dispositif de soupape (12, 13), côté tourné vers l'espace de travail (6),
caractérisé en ce
1.6 le capteur de température (25) est disposé dans l'espace de travail (6) ; ou bien
1.7 est en connexion conductrice de chaleur avec un composé disposé dans l'espace de travail (6) ; ou bien
1.8 le capteur de température (25) est prévu dans la zone d'un canal annulaire (20) pour vider l'espace de travail (6).

2. Retardateur hydrodynamique selon la revendication 1, **caractérisé en ce que** le capteur de température (25) est prévu dans la zone d'un logement (7) du retardateur (1).

3. Retardateur hydrodynamique selon la revendication 2, **caractérisé en ce que** le capteur de température (25) est disposé dans le logement (7) de telle sorte qu'il est accessible depuis l'extérieur du logement (7).

4. Retardateur hydrodynamique conformément à l'une des revendications 1 à 3, **caractérisé par** un dispositif convoyeur (23), à l'aide duquel l'espace de travail (6) peut être vidé et/ou évacué.

5. Retardateur hydrodynamique conformément à l'une des revendications 1 à 4, **caractérisé en ce qu'**un circuit de fluide de travail (8) est prévu pour le fluide de travail.

6. Retardateur hydrodynamique conformément à l'une des revendications 1 à 5, **caractérisé en ce que** le réfrigérant, en tant que fluide de travail, est formé dans un circuit de refroidissement de train d'entraînement de moteur à combustion.

7. Procédé d'utilisation d'un retardateur hydrodynamique (1) comportant
7.1 un espace de travail (6), composé
7.2 d'une roue à aubes primaire (4) et d'une roue à aubes secondaire (5), entre lesquelles se forme un écoulement circulaire de fluide de travail avec le retardateur (1) en mode freinage, où
7.3 le retardateur (1) peut être vidé en mode non-freinage par le biais d'un dispositif convoyeur (23), et où
7.4 le retardateur est vidé par au moins un dispositif de soupape (12, 13) permettant de commander le courant volumique du fluide de travail circulant dans les deux sens,
caractérisé en ce
7.5 la température dans la zone du retardateur (1) est détectée dans l'espace de travail (6) par l'intermédiaire d'un capteur de température (25) sur le côté dudit au moins un dispositif de soupape (12, 13), côté tourné vers l'espace de travail (6).

8. Procédé selon la revendication 7, **caractérisé en ce que** le retardateur (1) est déclenché par le biais du dispositif convoyeur (23) en mode non-freinage, lorsque la température dépasse un seuil prédéterminé.

9. Procédé selon la revendication 7 ou 8, **caractérisé en ce que** lorsque la température dépasse un (autre) seuil prédéterminé,
le retardateur (1) passe en mode freinage pendant quelques millisecondes.

10. Procédé selon la revendication 7, 8 ou 9, **caractérisé en ce que** le retardateur (1) passe de mode non-freinage en mode freinage uniquement lorsqu'une température mesurée dans le fluide de travail, dans un circuit de fluide de travail externe (8) ou dans un circuit de refroidissement pour le fluide de travail, est inférieure à une température limite, où la température du retardateur (1) est surveillée après passage en mode freinage jusqu'au passage suivant en mode freinage.
